# FASCICULE DE BREVET EUROPEEN

(11) **EP 2 936 798 B1**
(45) Date de publication et mention de la délivrance du brevet: **31.10.2018**
(21) Numéro de dépôt: 13814499.3
(22) Date de dépôt: 17.12.2013
(51) Int. Cl.: H04N 9/04, H04N 5/33, H04N 5/247

(54) **PROCEDE D'IMAGERIE D'UNE CIBLE DANS UN CIEL DE NUIT**
VERFAHREN ZUM ABBILDEN EINES ZIELS AM NACHTHIMMEL
METHOD FOR IMAGING A TARGET IN THE NIGHT SKY

(30) Priorité: 21.12.2012 FR 1203557
(43) Date de publication de la demande: 28.10.2015
(73) Titulaire: Thales, 92400 Courbevoie (FR)
(72) Inventeur: MIDAVAINE, Thierry, F-78995 Elancourt Cedex (FR)
(74) Mandataire: Brunelli, Gérald
(86) Numéro de dépôt international: PCT/EP2013/076853
(87) Numéro de publication internationale: WO 2014/095825

(56) Documents cités:
- WO-A2-2008/131313
- WO-A2-2008/131313
- Anonymous: "Counter-illumination - Wikipedia, the free encyclopedia", , 26 mars 2013 (2013-03-26), XP055098794, Extrait de l'Internet: URL:http://en.wikipedia.org/wiki/Counter-i llumination [extrait le 2014-01-28]
- Matthias Ehlers: "Die Nacht", fotocummunity.de, 27 November 2006 (2006-11-27), XP055072694, Retrieved from the Internet: URL:http://www.fotocommunity.de/search?q=N acht+300mm&index=fotos&options=YToxOntzOjU 6InN0YXJ0IjtzOjM6IjExMiI7fQ&pos=117&displa y=7309100 [retrieved on 2013-07-24]
- AchillesGunit: "Night vision look at USMC Huey and Cobra helicopter night shoot at Mojave Viper", youtube, 13 February 2012 (2012-02-13), page 1 pp., XP054977488, Retrieved from the Internet: URL:https://www.youtube.com/watch?v=Ujv2En CfLoo [retrieved on 2017-06-30]

## Description

L'invention concerne le domaine de l'observation sol-air ou air-air. L'invention concerne un dispositif d'imagerie et plus précisément un dispositif d'imagerie d'une cible aérienne dans un ciel de nuit.
On entend par « ciel de nuit » une partie de l'espace visible au dessus de l'horizon depuis un point quelconque de la Terre ou depuis les airs et qui ne reçoit plus de lumière solaire du fait de sa position par rapport au Soleil.

Généralement, un dispositif de détection ou d'imagerie d'une cible aérienne dans un ciel de nuit comprend une caméra infrarouge thermique.

La caméra infrarouge permet de mettre en évidence de multiples phénomènes grâce à la mise en image de la valeur des températures des objets observés ou de leur signature associée à des raies d'émission infrarouge.

La caméra infrarouge capte au travers de l'atmosphère des rayonnements émis par les objets. Un système radiométrique convertit la puissance de rayonnement en signaux numériques ou analogiques. Ceux-ci sont transcrits éventuellement en éclairements, luminances ou encore en températures par un calculateur et transformés en points lumineux sur un écran. La caméra infrarouge utilise une ou plusieurs bandes spectrales correspondant à l'infrarouge et plus particulièrement une première bande spectrale s'étendant sur une gamme de longueurs d'ondes comprises entre 3 et 5,5 micromètres appelée bande IR2 ou domaine du « Mid Wavelength InfraRed » ou MWIR, en langue anglaise, ou une deuxième bande spectrale s'étendant sur une gamme de longueurs d'ondes comprises entre 8 et 12 micromètres appelée bande IR3 ou domaine du « Long Wavelength InfraRed » ou LWIR, en langue anglaise.

Les caméras thermiques sont utilisées dans de nombreuses applications telles que la détection de points faibles de l'isolation d'un bâtiment ou la détection de victimes lors d'incendies. Les caméras infrarouges sont aussi utilisées lors d'opérations militaires nocturnes pour la détection, la reconnaissance et l'identification de cibles, notamment.

L'image d'une cible aérienne dans un ciel de nuit obtenue à l'aide d'une caméra infrarouge comprend la cible mais aussi des gaz de combustion chauds issus des propulseurs de la cible appelés « plumes de propulsion ». Les gaz de combustion comprennent une proportion importante de dioxyde de carbone présentant une bande d'émission très intense dans un domaine du MWIR et plus particulièrement une bande de longueurs d'ondes centrée sur 4,2 micromètres. La présence de dioxyde de carbone à haute température rend les gaz de combustion d'une cible visibles sur une image obtenue à l'aide d'une caméra infrarouge fonctionnant dans la bande 2 ou MWIR.

L'image obtenue peut être délivrée en noir et blanc avec un niveau de gris proportionnel à l'éclairement de la source si elle n'est pas résolue ou à sa luminance si elle est résolue angulairement. Une autre manière de délivrer ces images peut être réalisée par un codage en couleur.

Cette bande IR2 du MWIR est de ce fait bien adaptée pour réaliser la détection de cibles volantes à grande distance. Par contre, selon l'orientation de la cible par rapport à la caméra infrarouge, l'identification de la cible peut s'avérer difficile en raison de la présence de ces plumes de propulsion qui peuvent masquer les contours réels de la cible. En effet, l'intensité des émissions de la signature de la cible elle-même est souvent très inférieure à l'intensité des émissions des plumes de propulsions.

Dans ce contexte, il est proposé un dispositif d'imagerie de cible aérienne dans un ciel de nuit permettant notamment de pallier cet inconvénient.

Le dispositif proposé exploite la luminescence du ciel de nuit appelée le « night glow », en langue anglaise.

La luminescence du ciel de nuit ou « night glow » est définie comme étant une faible source étendue de lumière causée par une couche lumineuse d'environ 10 km d'épaisseur située dans la haute atmosphère entre 80 et 100 km d'altitude. Cette luminance nocturne est générée par des atomes et/ou des molécules comprenant notamment des groupements hydroxydes OH présents dans la composition de cette couche lumineuse et qui présentent des bandes d'émission dans le domaine du proche infrarouge ou « Near InfraRed » (NIR) et surtout de la bande IR1 ou « Short Wavelength InfraRed » (SWIR), en langue anglaise, compris entre 1 et 3 micromètres, cette faible lumière constituant un fond de ciel lumineux dans ce domaine de longueurs d'ondes.

Selon un aspect de l'invention, il est proposé un procédé selon la revendication 1.

La cible est typiquement une partie d'aéronef opaque et n'émettant pas dans le domaine de longueur d'onde compris entre 1 µm et 1,9 µm. Le dispositif d'imagerie ainsi utilisé permet d'obtenir l'image de la cible aérienne détectée, en silhouette opaque, sur un fond lumineux, l'image ne présentant pas les plumes de propulsion. Cette image à haute résolution des contours de la cible permet de faire sa reconnaissance et son identification.

Le dispositif d'imagerie est avantageusement installé à bord d'un aéronef en vol avec un diamètre D de pupille compris entre 30 mm et 300 mm et une distance focale f comprise entre 300 mm et 3000 mm, et avec un champ de vue <10°, pour une application air-air.

Le dispositif d'imagerie peut être installé au sol, avec un diamètre D de pupille compris entre 10 mm et 100 mm, une distance focale f comprise entre 30 mm et 300 mm et avec un champ de vue >10° pour une application sol-air.

Avantageusement, le dispositif d'imagerie comprend en outre des moyens d'acquisition et de traitement d'images connectés aux détecteurs. Les moyens d'acquisition et de traitement d'images peuvent être dissociés du dispositif d'imagerie. Les moyens d'acquisition et de traitement d'images permettent de réaliser des opérations algorithmiques afin d'améliorer le rapport signal sur bruit et pour permettre des opérations de traitements supplémentaires ou une transmission du signal.

Le dispositif d'imagerie comporte un premier objectif dont la focale varie entre 30 mm et 3000 mm et au moins un détecteur comprenant au moins un deuxième type de pixel configuré pour fonctionner dans un deuxième domaine de longueurs d'ondes, le deuxième domaine de longueurs d'ondes Δλ2 correspondant au domaine du MWIR entre 3 et 5 µm.

L'utilisation de détecteurs fonctionnant sur le domaine du MWIR permet en outre l'obtention d'une image permettant de visualiser les plumes de propulsion de la cible aérienne ce qui facilite la détection de la cible aérienne.

Eventuellement, au moins un détecteur comprend un troisième type de pixel configuré pour fonctionner dans un troisième domaine de longueurs d'ondes, le troisième domaine de longueurs d'ondes Δλ3 correspondant au domaine du proche UV et du bleu.

Un tel dispositif apportera une capacité complémentaire de reconnaissance et d'identification des cibles en particulier de jour.
L'association d'une détection dans le domaine Δλ2 du MWIR et d'une détection dans le domaine Δλ3 du bleu ou du proche UV est décrite dans la demande de brevet FR 1004934.

AchillesGunit"Night vision look at USMC Huey and Cobra helicopter night shoot at Mojave Viper",youtube, 13 février 2012 (2012-02-13), page 1 pp., XP054977488,Extrait de l'Internet:URL:https://www.youtube.com/watch? v=Ujv2EnCfLoo [extrait le 2017-06-30]
divulgue la détection d'un cible aérienne dans un ciel de nuit.

Dans un autre mode de réalisation, le dispositif d'imagerie comprend en outre une deuxième caméra comprenant un deuxième objectif de deuxième diamètre de pupille compris entre 10 mm et 100 mm et de deuxième distance focale comprise entre 30 mm et 300 mm, et au moins un détecteur fonctionnant dans le domaine Δλ2 du MWIR entre 3 et 5 µm.
Avantageusement, le dispositif d'imagerie tel que décrit précédemment comprend en outre un dispositif d'orientation d'une ligne de visée de l'objectif permettant notamment une surveillance de l'espace aérien dans un très grand domaine angulaire.
Avantageusement, un aéronef comprend un dispositif d'imagerie tel que décrit précédemment pour une application air-air.
Avantageusement, un engin au sol comprend un dispositif d'imagerie tel que décrit précédemment pour une application sol-air.
L'invention sera mieux comprise à l'étude de quelques modes de réalisation décrits à titre d'exemples nullement limitatifs, et illustrés par des dessins annexés sur lesquels :
- la figure 1 illustre un mode de réalisation du dispositif d'imagerie, selon un aspect de l'invention,
- la figure 2 illustre un autre mode de réalisation du dispositif d'imagerie, selon un aspect de l'invention,
- la figure 3 est une représentation graphique de la luminance d'un ciel de nuit en fonction de la longueur d'onde pour les limites des différents niveaux de nuit qui correspondent aux différentes phases lunaires, aux différentes couvertures nuageuses et pour un ciel de fin de journée,
- la figure 4 est une représentation graphique de la luminance d'une partie du ciel de nuit en fonction du temps,
- la figure 5 représente les différentes distances traversées à l'intérieur de la couche lumineuse en fonction de la position de la cible détectée par rapport au dispositif d'imagerie élaboré selon un aspect de l'invention,
- la figure 6 représente une image d'un ciel de nuit obtenue à partir d'un dispositif comprenant des détecteurs fonctionnant dans le domaine du SWIR, selon un aspect de l'invention.

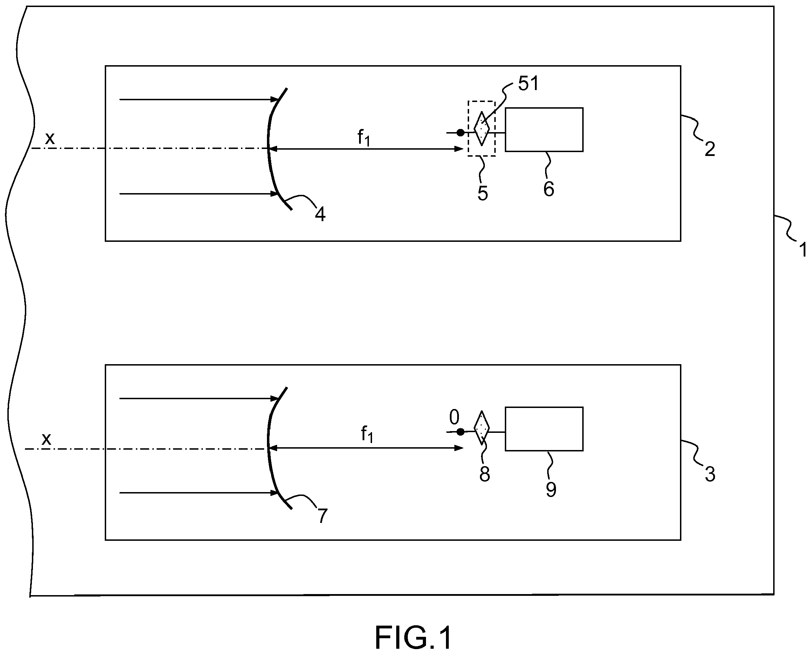

La figure 1 présente un mode de réalisation d'un dispositif d'imagerie.

Le dispositif 1 d'imagerie comprend une première caméra 2 et éventuellement une deuxième caméra 3.

La première caméra 2 comprend un premier objectif 4 comprenant une pupille de diamètre compris entre 30 mm et 300 mm et ayant une première distance focale f1 comprise entre 300 mm et 3000 mm. Le dimensionnement du premier objectif 3 permet de réaliser une première caméra à petit champ.

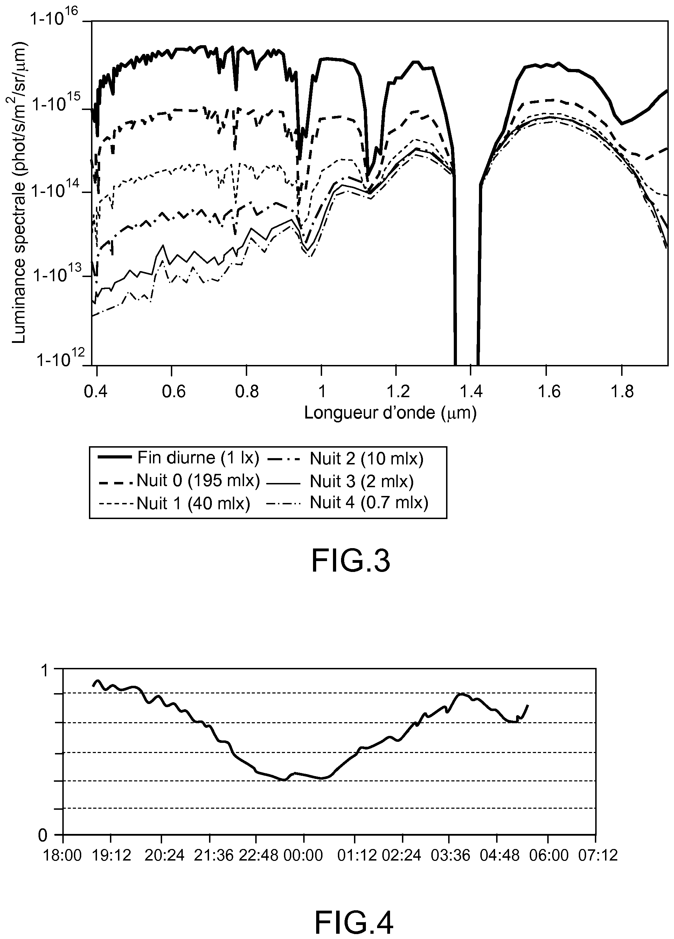

Un détecteur 5 est situé sensiblement dans le plan focal du premier objectif 4. Le détecteur 5 peut comprendre un réseau matriciel de pixels configurés pour fonctionner dans un premier domaine de longueurs d'ondes Δλ1, le premier domaine de longueurs d'ondes Δλ1 centré sur la valeur des longueurs d'onde de luminance maximale pour un ciel de nuit sans Lune (courbes des limites de nuit 3 à 2mlx et nuit 4 à 0,7mlx). Comme le montre la figure 3, ce domaine de longueur d'onde Δλ1 se situe dans la bande IR1 (ou SWIR) autour de 1,6 µm et s'étendant par exemple sur un domaine de longueurs d'ondes de largeur inférieure à 1µm.

Comme le montre la figure 3, la valeur de luminance maximale ainsi que la longueur d'onde correspondante est sensiblement identique pour toutes les phases lunaires. La longueur d'onde correspondant à la valeur de luminance maximale pour toutes les phases lunaires est sensiblement égale à 1,64 µm.

Le détecteur 5 permet d'exploiter la luminescence d'un ciel de nuit pour une meilleure visualisation de cibles aériennes. Pour exploiter la luminescence du ciel de nuit, il est indispensable que le niveau de bruit du détecteur 5 soit inférieur au signal équivalent à la luminance du ciel de nuit sur le premier domaine de longueurs d'ondes. Par exemple, pour un temps d'intégration de 40 ms, et pour un rapport signal sur bruit supérieur à 2,25, le niveau de bruit doit être de l'ordre ou inférieur à 10 électrons RMS. Le détecteur 5 est connecté à des moyens d'acquisition d'images 6 permettant d'améliorer la qualité des images et/ ou de les formater pour permettre la transmission du signal à un dispositif disposé en aval.

Avantageusement, le détecteur 5 est un photodétecteur comprenant une structure de type InGaAs ou de type HgCdTe. Alternativement, le détecteur 5 peut être une photodiode ou un matériau photoémissif comme une photocathode.

Les progrès technologiques des détecteurs peuvent également permettre d'envisager l'emploi de la bande IR1 ou SWIR jusqu'à 3µm de longueur d'onde, domaine où les cibles restent sombres, le fond de ciel nocturne lumineux toujours par l'effet du night glow, et où l'atmosphère est transparente.

La deuxième caméra 3 comprend un deuxième objectif 7 comprenant une pupille de diamètre compris entre 10 mm et 100 mm et ayant une deuxième distance focale f2 comprise entre 30 mm et 300 mm. Le dimensionnement du deuxième objectif 7 permet de réaliser une deuxième caméra à grand champ.

Un deuxième détecteur 8 est situé sensiblement dans le plan focal du deuxième objectif 7. Le détecteur 8 peut comprendre un réseau matriciel de pixels configurés pour fonctionner dans un deuxième domaine de longueurs d'ondes Δλ2 correspondant au domaine du MWIR. Le deuxième détecteur 8 est connecté à des moyens d'acquisition d'images 9 permettant d'améliorer la qualité des images et/ ou de les formater pour permettre la transmission du signal à un dispositif disposé en aval.

D'autres caméras ayant des détecteurs fonctionnant dans d'autres domaines de longueurs d'ondes peuvent être associées au dispositif d'imagerie tel que décrit précédemment.

Par exemple, la première caméra 2 comprend un objectif 4 comprenant une pupille de 60 mm et définissant une première distance focale f1 de 500 mm, le détecteur 5 comprend des pixels 51 de géométrie carrée de 15 micromètres de côté, le pas pixel, définissant l'espacement entre deux pixels consécutifs d'une ligne ou d'une colonne, étant de 15 micromètres adapté à la tache de diffraction. Le pas pixel permet de définir un champ de vue angulaire élémentaire de mesure ou Instantaneous Field of View (IFOV), en langue anglaise, de 30 µrd. En d'autres termes, la résolution de cette première caméra 2 permet d'enregistrer l'image d'une cible avec un pas pixel représentant 3 m à 100 km. Cette résolution est bien adaptée à la détection, à la reconnaissance et pour des distances plus courtes à l'identification d'aéronef.

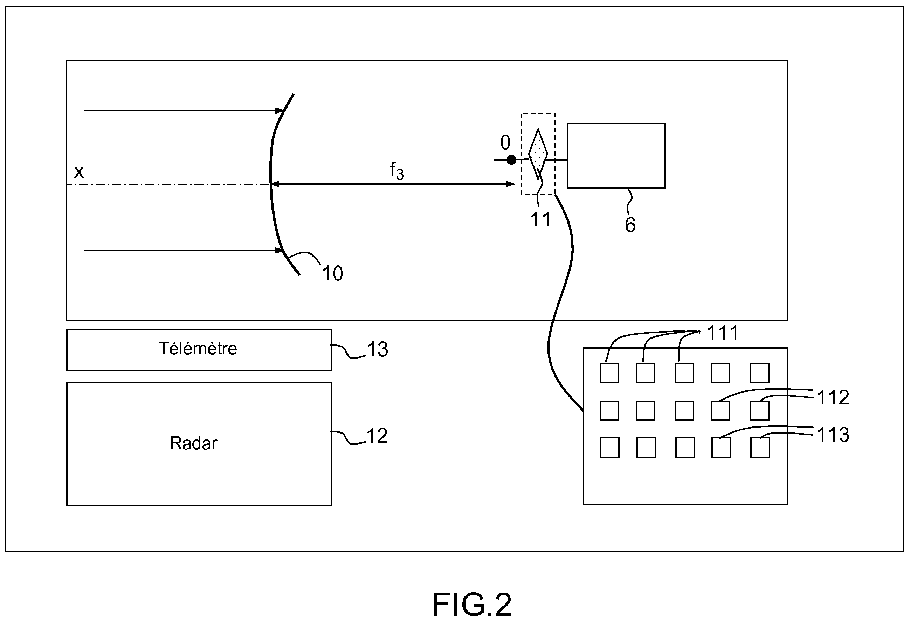

La figure 2 illustre une représentation schématique du dispositif d'imagerie selon un autre aspect de l'invention.

Le dispositif d'imagerie 1 comprend un objectif à distance focale variable 10, un détecteur 11 et des moyens d'acquisition 4. L'objectif à distance focale variable 10 définissant un axe optique Ox comprend une optique pouvant comprendre une ou plusieurs lentilles. Avantageusement, la distance focale f3 de l'objectif 10 varie entre 30 mm et 3000 mm.

Le détecteur 11 est situé sensiblement dans le plan focal défini par l'objectif 11. Le détecteur 11 est un élément permettant de traduire le flux lumineux en un signal électrique généré par un photocourant ou par une accumulation de photocharges durant un temps fini.

Avantageusement, le détecteur 11 est un photodétecteur de type HgCdTe ou InSb ou encore de type super réseau.

Le détecteur 11 comprend des pixels agencés sous forme de matrice. Le détecteur 11 comprend au moins un premier pixel 111 configuré pour fonctionner dans le premier domaine de longueurs d'ondes Δλ1.

Avantageusement, le premier domaine de longueurs d'ondes Δλ1 appartient au domaine du SWIR correspondant à un domaine de longueurs d'ondes compris entre 1 et 3 micromètres.

Le détecteur 11 comprend en outre au moins un deuxième pixel 112 configuré pour fonctionner dans un deuxième domaine de longueurs d'ondes Δλ2 correspondant au domaine du MWIR correspondant à un domaine de longueurs d'ondes compris entre 3 et 5 µm. Ou encore du fait des signatures des cibles il peut être avantageux de choisir ce domaine spectral en bande IR3 domaine du LWIR, entre 8 et 12 micromètres. Eventuellement, le détecteur 11 comprend en outre au moins un troisième pixel 113 configuré pour fonctionner dans un troisième domaine de longueurs d'ondes Δλ3 correspondant aux domaines du bleu, environ 470 nanomètres et du proche UV entre 200 et 400 nanomètres.

Selon un mode de réalisation, représenté sur la figure 2, le détecteur 11 comprend des pixels 111, 112, 113 arrangés de manière linéaire. Par exemple, le détecteur 11 comprend une première ligne de premiers pixels 111, une deuxième ligne de deuxièmes pixels 112 et une troisième ligne de troisièmes pixels 113.

Dans un autre mode de réalisation non représenté, le détecteur 11 comprend trois sous-détecteurs 11a, 11b et 11c comprenant chacun un ensemble de pixels 111, 112, 113 configurés pour fonctionner dans le premier Δλ1, le deuxième Δλ2 et le troisième Δλ3 domaines de longueurs d'ondes, respectivement. Les trois sous-détecteurs 11a, 11b et 11c sont montés sur un dispositif optique composé de lames séparatrices dichroïques ou de prismes permettant de disposer les trois sous-détecteurs sensiblement dans les trois plans focaux de manière à réaliser une image dans les trois domaines de longueurs d'ondes Δλ1, Δλ2, Δλ3 simultanément.

Les détecteurs 11 sont connectés à des moyens d'acquisition 6.

Eventuellement, le dispositif d'imagerie 1 est associé à un radar 12 permettant la détection et la désignation de cibles aériennes à imager.

Dans un autre mode de réalisation de l'invention, le dispositif d'imagerie est associé à un télémètre 13 permettant de déterminer la distance entre la cible et le dispositif d'imagerie 1.

La figure 3 est une représentation graphique de la luminance spectrale photonique du ciel pour différents éclairements lumineux ou niveaux de nuit pouvant correspondre à différentes phases lunaires ou couvertures nuageuses. Le domaine de longueurs d'ondes étudié est compris entre 0,4 et 2 µm. Ce domaine est borné dans les courtes longueurs d'onde par l'absorption atmosphérique qui est rapidement croissante dans le proche UV entre 0,4 µm et 0,3 µm et dans les grandes longueurs d'onde par le rayonnement thermique de l'atmosphère qui devient rapidement dominant à partir de 3µm.

L'évolution des courbes représentatives de la luminance photonique spectrale du ciel en fin de journée ou d'un ciel de nuit quelque soit la phase de la Lune est similaire. Les courbes présentent un premier intervalle de longueurs d'ondes compris entre 0,4 et 1,35 µm, un deuxième intervalle compris entre 1,45 µm et 1,9 µm. L'ensemble de ce domaine est marqué par des raies ou des bandes d'absorption atmosphérique avec à 0,8µm une raie provoquée par O₂, et entre 0,9 et 1,2 µm des raies d'absorption provoquées par H₂O et entre 1,35 et 1,45 µm une bande d'absorption très intense provoquée par H₂O et CO₂ (la vapeur d'eau et le gaz carbonique) ainsi que entre 1,8µm et 2µm également provoquée par H₂O et CO₂.

Sur le premier intervalle de longueurs d'onde entre 0,4 et 1,35 µm, la luminance d'un ciel en fin de journée est sensiblement supérieure à 10¹⁵ phot/s/m²/sr/µm et relativement plat en dehors des raies et bandes d'absorption atmosphérique vues plus haut et présente un maxima centré sur une longueur d'onde de 0,7 µm.

Sur le deuxième intervalle de longueurs d'ondes entre 1,45 µm et 1,9 µm, la luminance d'un ciel de fin de journée fluctue autour d'une valeur supérieure à 10¹⁵ phot/s/m²/sr/µm.

Sur le premier intervalle de longueurs d'onde, la luminance d'un ciel de nuit de pleine Lune, correspondant à la courbe Nuit 0, est relativement plat (en dehors des raies et bandes d'absorption atmosphérique vue plus haut) et voisin de 10¹⁵ phot/s/m²/sr/µm. Sur le deuxième intervalle de longueurs d'ondes, la luminance d'un ciel de pleine Lune est également voisin de 10¹⁵ phot/s/m²/sr/µm. Le deuxième intervalle de la courbe de luminance d'un ciel en fin de journée et le deuxième intervalle d'un ciel de nuit pour une nuit de pleine Lune sont proches et se superposent.

Pour les limites des autres niveaux de nuit 1, 2, 3, et 4 les luminances spectrales du ciel diminuent avec le niveau de nuit avec des niveaux voisin de 10¹⁴ phot/s/m²/sr/µm pour un niveau de nuit 1 et voisin de 10¹³ phot/s/m²/sr/µm pour un niveau de nuit 4 dans le domaine visible entre 0,4 et 0,8 µm. Pour tous ces niveaux de nuit la luminance du fond de ciel va être croissant avec la longueur d'onde. Dans le deuxième intervalle entre 1,45µm et 1,9µm la luminance du fond de ciel devient peu sensible au niveau de nuit comme le montre la superposition des courbes proches d'une valeur de 10¹⁵ phot/s/m²/sr/µm.

La figure 4 est une représentation graphique de la luminance relative d'une portion du ciel de nuit en fonction de l'heure dans la nuit.

En l'espèce, la luminance relative de la portion de ciel observée à 18h est voisine de 1 alors qu'à minuit la luminance relative est proche de 0,4. On observe ainsi une variation relative de la luminance au cours de la nuit dans un facteur 2 à 3 pour une zone d'observation donnée, ces variations observées sont aléatoires.

Ces variations temporelles de la luminance du ciel de nuit sont essentiellement dues à des variations des processus physico-chimiques mis en oeuvre dans la haute atmosphère et responsables de cette luminescence nocturne. Pour des raisons similaires, des variations géographiques de la luminance d'un ciel de nuit peuvent être observées.

En résumé, la luminance du ciel de nuit est inhomogène temporellement mais aussi géographiquement, elle varie de l'ordre d'un facteur 2 à 3 spatialement et géométriquement. Il est notable de remarquer que ce phénomène est toujours présent et n'est jamais nul contrairement aux phénomènes d'aurores boréales variables suivant l'activité solaire et observés dans une couronne de diamètre variable et centrée au voisinage des pôles magnétiques.

On rappelle dans le tableau ci-dessous, les différents niveaux de nuit tels que définis dans la norme RE.Aéro 790 40.

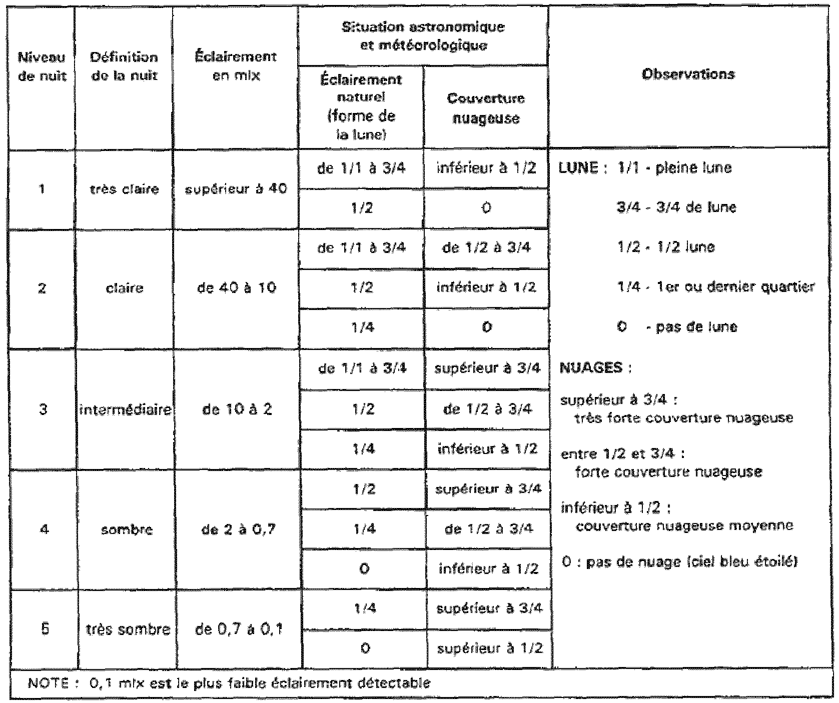

L'ordre de grandeur de la luminance du ciel de nuit conduit à un flux photonique de 1000 photons par seconde par pixel, pour une taille de pixel adaptée à la limite de diffraction compte tenu de l'ouverture numérique de l'optique. Ainsi pour un dispositif d'imagerie 1 fonctionnant avec une fréquence de 50 Hz, un pixel reçoit 20 photons par trame.

Selon l'invention, ces propriétés de luminance du ciel sont utilisées pour détecter une cible aérienne de la manière suivante. Selon l'usage habituel le dispositif d'imagerie IR est utilisé pour former une image à partir de l'émission IR de la cible aérienne, en l'occurrence ses plumes des gaz de combustions de propulsion dans la bande IR2 ou MWIR ou sa signature thermique du fait de l'échauffement cinétique de sa surface dans la bande IR2 ou MWIR ou dans la bande IR3 ou LWIR. Au contraire, selon l'invention ce dispositif d'imagerie est utilisé pour former l'image obtenue sans émission IR de la cible. Les plumes de propulsion n'apparaissent pas sur l'image obtenue ; ce sont les parties non émissives dans ce domaine IR1 de longueur d'onde (1 µm - 1,9 µm) qui apparaissent. L'image qui est celle de la silhouette de la cible aérienne est obtenue en ombre chinoise ; c'est son environnement lumineux spécifique (ciel de nuit de niveau 4) qui est émissif dans ce domaine de longueurs d'onde.

L'image obtenue est alors traitée pour en extraire cette (ou ces) silhouette(s) aux fins d'analyse et d'identification. Cette extraction peut être réalisée par un observateur ou automatiquement. De manière classique on peut utiliser comme procédé d'extraction automatique de la cible un algorithme d'analyse de la luminance du fond et de ses fluctuations spatio temporelles qui détermine un seuil adaptatif. Si le signal passe sous ce seuil alors il y a détection d'une cible en contraste négatif. L'analyse d'image à haute résolution angulaire (par exemple par des traitements d'accumulation avec recalage ou par des traitements dit de super resolution) au voisinage de la détection permet de délivrer une image de la silhouette de la cible. L'analyse de cette silhouette éventuellement associée à la mesure de distance et à des banques d'images de référence permet de réaliser une classification de la cible, sa reconnaissance et son identification.

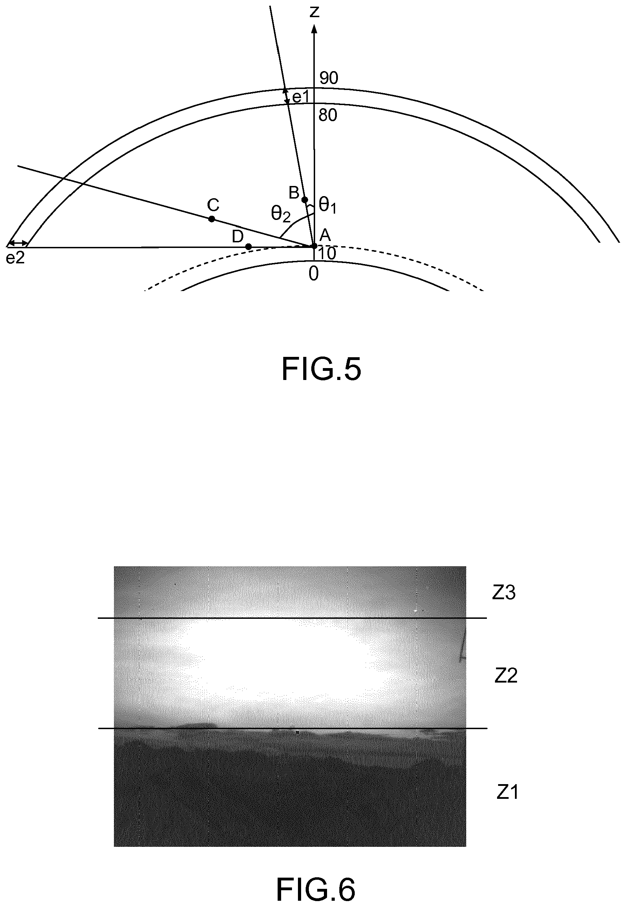

La figure 5 représente une coupe de l'atmosphère terrestre et met en évidence la couche lumineuse responsable de la luminescence du ciel de nuit.

La figure 5 présente un axe Oz représentant l'altitude par rapport à un point O situé à la surface de la Terre, le point O correspondant à l'altitude zéro et étant situé sur une sphère de rayon égal au rayon terrestre et centrée sur le centre de la Terre. Un premier arc de cercle noté 10 correspondant à une altitude de 10 km représente un exemple d'altitude pour un aéronef. Un deuxième arc de cercle correspondant à une altitude de 80 km représente approximativement la limite inférieure à partir de laquelle la couche responsable de la luminescence du ciel de nuit peut se former. Elle constitue une sphère de rayon égal au rayon terrestre plus l'altitude de cette couche centrée sur le centre de la Terre. Un troisième arc de cercle correspondant à une altitude de 90 km représente approximativement la limite supérieure en dessous de laquelle la couche responsable de la luminescence du ciel de nuit peut se former. Cette limite constitue également une sphère centrée sur le centre de la Terre.

Le point A correspond à la position d'un dispositif d'imagerie 1 basé sur l'exploitation de la luminescence du ciel de nuit. Il est embarqué sur l'aéronef situé pour cet exemple à 10 km d'altitude.

Un point B correspond à une première cible aérienne à imager et un angle θ1 correspond à l'écart angulaire entre l'axe passant par les points A et B et l'axe Oz. En l'espèce l'écart angulaire est relativement faible, en d'autres termes, la cible à imager B est située sensiblement à la verticale du point A. La distance traversée e1 de la couche responsable du fond lumineux est sensiblement égale à l'épaisseur de la couche soit environ 10 km.

Un point C correspond à une deuxième cible aérienne à imager et un angle θ2 correspond à un deuxième écart angulaire entre l'axe passant par les points A et C et l'axe Oz. En l'espèce le deuxième écart angulaire θ2 est bien supérieur au premier écart angulaire θ1. La distance traversée e2 de la couche responsable du fond lumineux est bien supérieure à l'épaisseur de la couche. Par exemple, pour un angle θ2 égale à 90°, correspondant à une cible en un point D au voisinage de la même altitude que A la distance e2 est égale à 65 km. La figure 5 schématise la géométrie : pour la Terre son rayon de courbure voisin de 6000 km est relativement 60 fois plus grand que l'écart voisin de 100km entre la surface de Terre et la couche responsable de la luminescence du ciel de nuit. Ceci explique pourquoi sur la figure on ne retrouve pas le rapport 6,5 entre e2 et e1.

On comprendra aisément que plus la distance traversée à l'intérieur de la couche responsable de la luminescence du ciel de nuit est grande et plus la quantité de molécules responsables de la luminescence présentant une bande d'émission centrée sur une longueur d'onde comprise entre 1 et 3 micromètres est importante. Ainsi, la luminance horizontale est 6,5 fois plus intense que la luminance zénithale.

Dans ce contexte, une application privilégiée de l'invention est une application air-air telle l'imagerie d'une cible aérienne par le dispositif d'imagerie 1 telle que décrit précédemment, le dispositif 1 étant embarqué dans un aéronef.

La figure 6 représente une image du ciel de nuit enregistrée à l'aide du dispositif d'imagerie tel que décrit précédemment en altitude.

Le dispositif d'imagerie utilisé pour réaliser cette image comprend au moins un détecteur 5 comprenant des pixels 51 configurés pour fonctionner dans un domaine de longueurs d'ondes correspondant au SWIR entre 1 et 3 micromètres.

L'image obtenue est en noir et blanc, il est possible de la diviser en trois zones : une première zone z1 correspondant au sol ou au sommet des nuages, une deuxième zone z2 correspondant à l'horizon et au domaine angulaire immédiatement au-dessus du ciel de nuit et une troisième zone z3 correspondant au voisinage de la partie zénithale du ciel de nuit.

La première zone correspond au sol et au sommet des nuages. Ces derniers apparaissent de manière très sombre, du fait des bandes d'absorption de l'eau dans ce domaine de longueurs d'ondes.

La deuxième zone z2 est lumineuse en raison du night glow et de la visée avec un angle θ2 important.

La troisième zone Z3 correspond à la partie zénithale du ciel de nuit, la luminance y est progressivement plus faible avec θ1 progressivement décroissant.

Notons que des nuages de haute altitude de type cirrus constitués de germes de cristaux de glaces probablement de diamètre inférieur à la longueur d'onde correspondant à la bande d'émission responsable de la luminance, sont principalement diffusants. Par contre des nuages de basses altitudes constitués de gouttelettes d'eau absorbantes dans le domaine du SWIR pour une longueur d'onde supérieure à 1,4 µm, sont principalement absorbants.

En d'autres termes, les nuages de haute altitude sont diffusants et ne nuisent pas à l'observation de la luminescence du ciel de nuit dans le domaine du SWIR alors que les nuages de basse altitude sont opaques et sombres et empêchent l'observation de la luminescence du ciel de nuit dans le domaine de longueurs d'onde supérieur à 1,4 µm depuis le sol ou depuis une altitude inférieure aux couches nuageuses.

En conclusion, le dispositif d'imagerie 1 comprenant un détecteur (5, 11) comprenant des pixels (51, 111) configurés pour fonctionner dans le domaine du SWIR est particulièrement adapté pour des applications air-air, le dispositif d'imagerie 1 étant embarqué dans un aéronef évoluant au-dessus des nuages de basse altitude. Il faut noter que les nuits de niveaux 5 nuit sans Lune avec une couverture nuageuse inférieure à 0,7mlux n'ont pas de réalité pour ce type de configuration air-air.

Le dispositif d'imagerie 1 est aussi adapté aux applications sol-air, il permet la détection notamment de cibles aériennes évoluant sous un ciel clair et dégagé. Il permet aussi la détection depuis le sol de cibles aériennes évoluant à plus haute altitude si le ciel de nuit ne comprend pas de nuages de basse altitude.

Le dispositif d'imagerie 1 selon l'invention permet l'imagerie de cibles aériennes dans un ciel de nuit. L'image d'une cible aérienne obtenue est une image en noir et blanc. La silhouette de la cible est représentée en noir telle une ombre chinoise sur un fond lumineux clair. Les gaz d'échappement ne comprenant pas dans le domaine du SWIR de bandes d'émission très intenses comme dans le domaine du MWIR, l'image de la cible correspond uniquement à la silhouette de la cible ce qui facilite la localisation angulaire et l'identification de l'aéronef. Du fait de la longueur d'onde, la résolution est améliorée d'un facteur 3 par rapport à un dispositif d'imagerie fonctionnant dans le MWIR, telle que les caméras infrarouges classiques. Dans les cas où les points très chauds de l'avion sont visibles tels que les sorties de réacteurs ou tuyères, ceux ci peuvent donner une signature infrarouge mesurable dans le SWIR du fait de la loi du corps noir. Ces signatures peuvent aider à identifier l'aéronef et à déterminer son orientation. Ces signatures seront en particulier plus importantes lorsque les cibles sont en présentation arrière.

## Revendications

1. Procédé de détection d'une cible n'émettant pas dans le domaine de longueur d'onde compris entre 1 µm et 1,9 µm, conçu de façon à ce que la cible étant dans un environnement lumineux de ciel de nuit, - on utilise un dispositif d'imagerie de focale f et de diamètre de pupille D, comprenant au moins un détecteur (5, 11) comprenant des types de pixels (51, 111) configurés pour fonctionner dans le domaine de longueurs d'ondes compris entre 1 µm et 1,9 µm, pour former une image de la cible dans ledit domaine de longueur d'onde compris entre 1 µm et 1.9 µm, lesdits détecteurs (5, 11) présentant un niveau de bruit inférieur au signal généré par le détecteur dans ledit domaine de longueur d'onde, correspondant à une situation astronomique et météorologique selon un éclairement naturel avec une forme de la Lune de 1/2 et une couverture nuageuse supérieur à 3/4, ou à une situation astronomique et météorologique selon un éclairement naturel avec une forme de la Lune de 1/4 et une couverture nuageuse de 1/2 à 3/4 ou à une situation astronomique et météorologique selon un éclairement naturel avec une forme de la Lune de 0 et une couverture nuageuse inférieur à 1/2, ou à une situation astronomique et météorologique selon un éclairement naturel supérieur aux situations susmentionnées,
- on extrait dans ladite image obtenue par ce dispositif, au moins une zone en contraste négatif c'est-à-dire une zone noire sur fond clair correspondant à la silhouette de la cible dans le ciel de nuit.

2. Procédé de détection d'une cible selon la revendication précédente, conçu de façon à ce que la cible est une partie d'aéronef n'émettant pas dans le domaine de longueur d'onde compris entre 1 µm et 1,9 µm.

## Patentansprüche

1. Verfahren zur Detektion eines Ziels, das nicht in der Wellenlänge zwischen 1 µm und 1,9 µm sendet, so konzipiert, dass, während das Ziel in einem leuchtenden Nachthimmelumfeld befindlich ist,
- man eine Bildgebungsvorrichtung mit Brennweite f und Pupillendurchmesser D verwendet, welche mindestens einen Detektor (5, 11) beinhaltet, welcher Pixelarten (51, 111) beinhaltet, welche konfiguriert sind, um im Wellenlängenbereich zwischen 1 µm und 1,9 µm zu arbeiten, um ein Bild des Ziels in dem Wellenlängenbereich zwischen 1 µm und 1.9 µm zu bilden, wobei die Detektoren (5, 11) einen Rauschpegel unterhalb des vom Detektor in dem Wellenlängenbereich erzeugten Signals aufweisen, was einer astronomischen und meteorologischen Situation mit einer natürlichen Beleuchtung mit einer Mondform von 1/2 und einer Wolkenbedeckung über 3/4 entspricht, oder einer astronomischen und meteorologischen Situation mit einer natürlichen Beleuchtung mit einer Mondform von 1/4 und einer Wolkenbedeckung zwischen 1/2 bis 3/4 oder einer astronomischen und meteorologischen Situation mit einer natürlichen Beleuchtung mit einer Mondform von 0 und einer Wolkenbedeckung unter 1/2, oder einer astronomischen und meteorologischen Situation mit einer natürlichen Beleuchtung oberhalb der obengenannten Situationen,
- man in dem von dieser Vorrichtung erzielten Bild mindestens eine negative Kontrastzone extrahiert, d. h. eine schwarze Zone auf hellem Hintergrund, welche der Silhouette des Ziels im Nachthimmel entspricht.

2. Verfahren zur Detektion eines Ziels nach dem vorhergehenden Anspruch, so konzipiert, dass das Ziel ein Luftfahrzeugteil ist, welches nicht in der Wellenlänge zwischen 1 µm und 1,9 µm sendet.

## Claims

1. A method for detecting a target not emitting in the wavelength range lying between 1 µm and 1.9 µm, designed such that, with the target being in a night sky luminous environment,
- an imaging device is used of focal length f and of pupil diameter D, comprising at least one detector (5, 11) comprising types of pixels (51, 111) configured to operate in the wavelength range lying between 1 µm and 1.9 µm, in order to form an image of the target in said wavelength range lying between 1 µm and 1.9 µm, said detectors (5, 11) exhibiting a noise level that is less than the signal generated by the detector in said wavelength range, corresponding to an astronomical and metrological situation in natural light with a 1/2 moon shape and cloud cover of more than ¾, or to an astronomical and metrological situation in natural light with a quarter-moon shape and cloud cover of 1/2 to 3/4 or to an astronomical and metrological situation in natural light with a 0 moon shape and cloud cover of less than 1/2 or to an astronomical and metrological situation in natural light that is greater than the aforementioned situations;
- at least one negative-contrast zone is extracted from said image obtained by said device, i.e. a black zone on a bright background corresponding to the silhouette of the target in the night sky.

2. The method for detecting a target as claimed in the preceding claim, designed such that the target is an aircraft part not emitting in the wavelength range lying between 1 µm and 1.9 µm.
